# EUROPEAN PATENT APPLICATION

(11) **EP 4 322 261 A1**
(43) Date of publication of application: **14.02.2024**
(21) Application number: 22931229.3
(22) Date of filing: 17.06.2022
(51) Int. Cl.: H01M 4/60

(54) **ADDITIVE AND PREPARATION METHOD THEREFOR AND USE THEREOF, AND POSITIVE ELECTRODE PLATE AND PREPARATION METHOD THEREFOR**

(71) Applicant: Contemporary Amperex Technology Co., Limited, Ningde City, Fujian 352100 (CN)
(72) Inventor: LIN, Jianghui, Ningde, Fujian 352100 (CN); ZHAO, Yanjie, Ningde, Fujian 352100 (CN); LI, Xing, Ningde, Fujian 352100 (CN); JIN, Haizu, Ningde, Fujian 352100 (CN)
(74) Representative: Gong, Jinping
(86) International application number: PCT/CN2022/099558
(87) International publication number: WO 2023/240628

(57) **Abstract**

This application relates to an additive having a structure of general formula I, where R¹ and R² are each independently hydrogen or a C₁-C₁₂ alkyl group; R³ and R⁴ are each independently hydrogen, halogen, or a C₁-C₁₂ alkyl group; R⁵ is hydrogen or a C₁-C₁₂ alkyl group; R⁶ is a 4-20-membered nitrogen-containing heterocyclic group unsubstituted or substituted with a substituent group or a 5-20-membered nitrogen-containing heteroaryl group unsubstituted or substituted with a substituent group, where the substituent group is halogen, a hydroxyl group, a primary amino group, a secondary amino group, a C₁-C₁₂ alkyl group, or a C₁-C₁₂ alkoxy group; m is an integer ranging from 1000 to 10000; and n is an integer ranging from 10 to 1000. In the additive in this application, the group R⁶ is a nitrogen-containing heterocyclic group or a nitrogen-containing heteroaryl group, in which the nitrogen atom possesses lone pair electrons, which enables strong adsorption of HF in the battery, thereby immobilizing HF and preventing HF from damaging a passivation layer on surface of a positive electrode current collector. This can greatly mitigate corrosion of the positive electrode current collector, such as aluminum foil, prolonging service life of the battery.

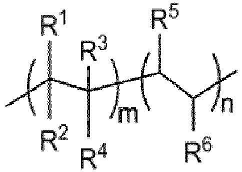

## Description

### TECHNICAL FIELD

This application relates to the field of lithium-ion battery technologies, and specifically to an additive and a preparation method and usage thereof, a positive electrode plate and a preparation method thereof, and a lithium-ion battery.

### BACKGROUND

Lithium-ion batteries have garnered significant attention due to their high energy density, high capacity, and good cycling stability and retention characteristics. However, the positive electrode current collector of a lithium-ion battery is prone to corrosion after long-term use, which in turn causes a decline in the battery capacity, and in severe cases even causes the electrode plate to break, piercing the separator and leading to a short circuit, likely to result in a safety accident.

Therefore, there is an urgent need for an additive that can mitigate the corrosion of the positive electrode current collector.

### SUMMARY

In view of the problem in the background technology, this application provides an additive that can mitigate corrosion of a positive electrode current collector.

The additive provided in a first aspect of this application has a structure of general formula I: 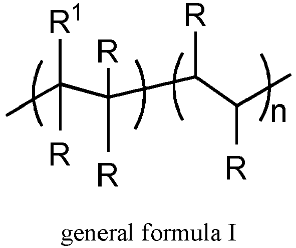 where
R¹ and R² are each independently hydrogen or a C₁-C₁₂ alkyl group;
R³ and R⁴ are each independently hydrogen, halogen, or a C₁-C₁₂ alkyl group;
R⁵ is hydrogen or a C₁-C₁₂ alkyl group;
R⁶ is a 4-20-membered nitrogen-containing heterocyclic group unsubstituted or substituted with a substituent group or a 5-20-membered nitrogen-containing heteroaryl group unsubstituted or substituted with a substituent group, where the substituent group is halogen, a hydroxyl group, a primary amino group, a secondary amino group, a C₁-C₁₂ alkyl group, or a C₁-C₁₂ alkoxy group;
m is an integer ranging from 1000 to 10000; and
n is an integer ranging from 10 to 1000.

In the technical solution of this embodiment of this application, the group R⁶ is a nitrogen-containing heterocyclic group or a nitrogen-containing heteroaryl group, in which the nitrogen atom possesses lone pair electrons, which enable strong adsorption of HF in the battery, thereby immobilizing HF and preventing HF from damaging a passivation layer on surface of a positive electrode current collector. This can greatly mitigate corrosion of the positive electrode current collector such as aluminum foil and prolong service life of the battery.

In addition, since HF in the battery further reacts with the positive electrode active material, causing loss of the positive electrode active material and a decrease in capacity, the additive can further alleviate the reversible capacity decline of the positive electrode active material, thereby further prolonging service life of the battery.

In some embodiments, a first example of the first aspect is presented according to the first aspect, where the 4-20-membered nitrogen-containing heterocyclic group is a 4-membered nitrogen-containing heterocyclic group, a 5-membered nitrogen-containing heterocyclic group, or a 6-membered nitrogen-containing heterocyclic group. The 5-20-membered nitrogen-containing heteroaryl group is a 5-membered nitrogen-containing heteroaryl group, a 6-membered nitrogen-containing heteroaryl group, or a 5-14-membered nitrogen-containing fused heteroaryl group.

In some embodiments, a second example of the first aspect is presented according to the first aspect, where the 4-20-membered nitrogen-containing heterocyclic group is an azetidinyl group, a tetrahydropyrrolyl group, a pyrrolidonyl group, or a hexahydropyridinyl group. The 5-20-membered nitrogen-containing heteroaryl group is a pyrrolyl group, a pyrazolyl group, an imidazolyl group, a 1,2,3-triazolyl group, a 1,2,4-triazolyl group, a tetrazolyl group, a pyridyl group, a pyridazinyl group, a pyrimidinyl group, a pyrazinyl group, a 1,3,5-triazinyl group, a quinolinyl group, a benzimidazolyl group, or a benzotriazolyl group. These nitrogen-containing groups possess lone pair electrons, so they can bond with HF, thereby immobilizing HF and preventing HF from damaging a passivation layer on surface of an aluminum foil substrate. This can greatly mitigate corrosion of the aluminum foil. In addition, this can prevent HF from corroding the positive electrode material and thus reduces loss of the positive electrode material, providing a beneficial effect on the capacity retention rate of the cell.

In some embodiments, a third example of the first aspect is presented according to the first aspect, where R³ and R⁴ are each independently halogen. In this design, halogen atoms are introduced which can improve adhesion performance of the additive, so the additive can better adhere to surface of the positive electrode current collector, maximizing the corrosion mitigation effect of the additive.

In some embodiments, a fourth example of the first aspect is presented according to the first aspect, where m:n = (10-1000): 1. In this design, m indicates the number of polymerized units that have an adhesion effect (or units containing F atoms), and n indicates the number of polymerized units that can adsorb HF (or units containing nitrogen-containing heterocyclic groups). In the case of a relatively large ratio of m to n, when the additive is added to the primer coating, the primer coating has good adhesion to the electrode plate, but weak ability to adsorb HF, which has a poor effect on alleviating the corrosion of the positive electrode current collector, reducing the loss of the positive electrode active material due to HF, and improving cycling performance of the battery cell; and in the case of a too small m/n, when the additive is added to the primer coating, the primer coating has a poor adhesion to the electrode plate and thus easily fall off, resulting in failure of corrosion mitigation. With the ratio of the polymerization numbers of the two units in the molecular structure of the additive controlled, the corrosion mitigation effect of the additive can be maximized.

In some embodiments, a fifth example of the first aspect is presented according to the first aspect, where m is an integer ranging from 5000 to 10000; n is an integer ranging from 50 to 500; and m:n = (50-500): 1. In this design, the corrosion mitigation effect of the additive can be further improved by adjusting m, n, and their ratio.

In some embodiments, a sixth example of the first aspect is presented according to the first aspect, where R¹ and R² are each independently hydrogen or a C₁-C₆ alkyl group;
R³ and R⁴ are each independently hydrogen, halogen, or a C₁-C₆ alkyl group;
R⁵ is hydrogen or a C₁-C₆ alkyl group;
R⁶ is a tetrahydropyrrolyl group unsubstituted or substituted with a substituent group, a pyrrolidonyl group unsubstituted or substituted with a substituent group, a pyridinyl group unsubstituted or substituted with a substituent group, a hexahydropyridinyl group unsubstituted or substituted with a substituent group, or an imidazolyl group unsubstituted or substituted with a substituent group, where the substituent group is halogen, a hydroxyl group, a primary amino group, a secondary amino group, a C₁-C₆ alkyl group, or C₁-C₆ alkoxy group;
m is an integer ranging from 1000 to 10000;
n is an integer ranging from 10 to 1000; and
m:n = (10-1000):1.

In this design, the corrosion mitigation effect of the additive can be further improved by optimizing the groups R¹, R², R³, R⁴, R⁵, and R⁶, m, and n.

In some embodiments, a seventh example of the first aspect is presented according to the first aspect, where R¹ and R² are each independently hydrogen.
R³ and R⁴ are each independently F;
R⁵ is hydrogen or a C₁-C₆ alkyl group;
R⁶ is a tetrahydropyrrolyl group unsubstituted or substituted with a substituent group, a pyrrolidonyl group unsubstituted or substituted with a substituent group, or a pyridinyl group unsubstituted or substituted with a substituent group, where the substituent group is a C₁-C₆ alkyl group;
m is an integer ranging from 1000 to 10000;
n is an integer ranging from 10 to 1000; and
m:n = (10-1000):1.

In this design, the corrosion mitigation effect of the additive can be further improved by optimizing the groups R¹, R², R³, R⁴, R⁵, and R⁶, the substituent group, m, and n.

A second aspect of this application provides a preparation method of additive of general formula I, including the following steps:
reacting a compound of formula II with a compound of formula III in the presence of an initiator to polymerize, to obtain the additive of general formula I: 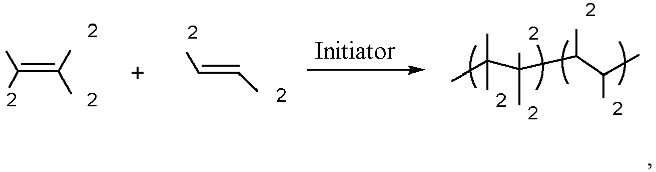 where
R¹ and R² are each independently hydrogen or a C₁-C₁₂ alkyl group;
R³ and R⁴ are each independently hydrogen, halogen, or a C₁-C₁₂ alkyl group;
R⁵ is hydrogen or a C₁-C₁₂ alkyl group;
R⁶ is a 4-20-membered nitrogen-containing heterocyclic group unsubstituted or substituted with a substituent group or a 5-20-membered nitrogen-containing heteroaryl group unsubstituted or substituted with a substituent group, where the substituent group is halogen, a hydroxyl group, a primary amino group, a secondary amino group, a C₁-C₁₂ alkyl group, or a C₁-C₁₂ alkoxy group;
m is an integer ranging from 1000 to 10000; and
n is an integer ranging from 10 to 1000.

In the technical solution of this embodiment of this application, the compound of formula II undergoes a polymerization reaction with the compound of formula III, so the additive in this application can be easily prepared.

In some embodiments, a first example of the second aspect is presented according to the second aspect, where a molar ratio of the compound of formula II to the compound of formula III is (10-1000): 1.

In this design, the ratio of m to n can be controlled by adjusting the molar ratio of the compound of formula II to the compound of formula III, thereby maximizing adhesion performance and HF adsorption of the additive.

In some embodiments, a second example of the second aspect is presented according to the second aspect, where when the polymerization reaction is complete, a resulting crude product is precipitated in ice-cold ethyl ether. In this design, the crude product is precipitated in ice-cold ethyl ether, thereby implementing purification of the product, improving the product purity.

A third aspect of this application provides a usage of the additive in the first aspect of this application to mitigate corrosion of a positive electrode current collector.

A fourth aspect of this application provides a positive electrode plate including the additive in the first aspect of this application.

In the technical solution of this embodiment of this application, the additive of the first aspect of this application is used, so the corrosion of the positive electrode current collector in the positive electrode plate of this application can be greatly alleviated, effectively prolonging service life of the battery.

A fifth aspect of this application provides a preparation method of positive electrode plate, including:
mixing the additive in the first aspect, a conductive agent, and a solvent, applying the mixture on a positive electrode current collector, and performing drying, to obtain a primer coating; and
forming a positive electrode material layer on the primer coating.

In the technical solution of this embodiment of this application, the primer coating including the additive of this application is formed on the positive electrode current collector, and the positive electrode material layer is formed on the primer coating. This can effectively adsorb and immobilize HF in the battery, reduce the corrosion of the positive electrode current collector and the loss of the positive electrode active material, and prolong service life of the battery.

A sixth aspect of this application provides a lithium-ion battery including a positive electrode plate in the fourth aspect of this application or a positive electrode plate obtained according to the preparation method in the fifth aspect of this application.

In the technical solution of this embodiment of this application, the additive of the first aspect of this application is used, so the corrosion of the positive electrode current collector in the lithium-ion battery of this application can be greatly alleviated, effectively prolonging service life of the battery.

The foregoing description is merely an overview of the technical solutions of this application. For a better understanding of the technical approaches in this application such that they can be implemented according to the content of this specification, and to make the above and other objectives, features and advantages of this application more obvious and easier to understand, the following describes specific embodiments of this application.

### BRIEF DESCRIPTION OF DRAWINGS

To describe the technical solutions in embodiments of the present invention more clearly, the following briefly describes the accompanying drawings required for describing the embodiments of the present invention. Apparently, the accompanying drawings in the following description show merely some embodiments of the present invention, and persons of ordinary skill in the art may still derive other drawings from the accompanying drawings without creative efforts.
FIG. 1 shows an electronic image of a positive electrode plate obtained from disassembling a cycled lithium-ion battery corresponding to an additive in example 1.
FIG. 2 shows an electronic image of a positive electrode plate obtained from disassembling a cycled lithium-ion battery prepared in comparative example 1.
FIG. 3 shows the longitudinal cross-sectional view at circle A in FIG. 2.

### DESCRIPTION OF EMBODIMENTS

To make the objectives, technical solutions, and beneficial technical effects of this application clearer, the following describes this application in detail with reference to specific embodiments. It should be understood that the embodiments described in this specification are merely intended to interpret this application, but not intended to limit this application.

For simplicity, only some numerical ranges are explicitly disclosed in this specification. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, although not explicitly recorded, each point or individual value between endpoints of a range is included in the range. Therefore, each point or individual value may be used as its own lower limit or upper limit to be combined with any other point or individual value or combined with any other lower limit or upper limit to form a range not explicitly recorded.

In the descriptions of this specification, it should be noted that "more than" and "less than" are inclusive of the present number and that "more" in "one or more" means more than two (including two), unless otherwise specified.

The foregoing invention content of this application is not intended to describe each of the disclosed embodiments or implementations of this application. The following description illustrates exemplary embodiments in more detail by using examples. Throughout this application, guidance is provided by using a series of embodiments, and these embodiments may be used in various combinations. In the examples, enumeration is merely representative and should not be interpreted as exhaustive.

Lithium-ion batteries have garnered significant attention due to their high energy density, high capacity, and good cycling stability and retention characteristics. However, the positive electrode current collector of a lithium-ion battery is prone to corrosion after long-term use, which in turn causes a decline in the battery capacity, and in severe cases even causes the electrode plate to break, piercing the separator and leading to a short circuit, likely to result in a safety accident. Therefore, there is an urgent need for an additive that can mitigate the corrosion of the positive electrode current collector.

The inventors have found that lithium salts such as LiTFSI or LiFSI in the electrolyte are converted into HF after a series of reactions, and HF destroys the passivation layer on surface of the positive electrode current collector, thus leading to the corrosion of the positive electrode current collector.

Through in-depth research, the inventors have designed a polymer additive containing 4-20-membered nitrogen-containing heterocyclic groups, in which the nitrogen atom possesses lone pair electrons, which enable strong adsorption of HF in the battery, thereby immobilizing HF and preventing HF from damaging a passivation layer on surface of a positive electrode current collector. This can greatly alleviate the corrosion of the positive electrode current collector, such as aluminum foil, prolonging service life of the battery.

In addition, since HF in the battery further reacts with the positive electrode active material, causing loss of the positive electrode active material and a decrease in capacity, the additive can further alleviate the reversible capacity decline of the positive electrode active material, thereby further prolonging service life of the battery.

Specifically, a first aspect of this application provides an additive having a structure of general formula I: 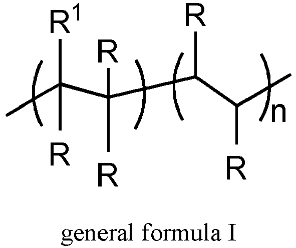 where
R¹ and R² may each independently be hydrogen or a C₁-C₁₂ alkyl group;
R³ and R⁴ may each independently be hydrogen, halogen, or a C₁-C₁₂ alkyl group;
R⁵ may be hydrogen or a C₁-C₁₂ alkyl group;
R⁶ is a 4-20-membered nitrogen-containing heterocyclic group unsubstituted or substituted with a substituent group or a 5-20-membered nitrogen-containing heteroaryl group unsubstituted or substituted with a substituent group, where the substituent group is halogen, a hydroxyl group, a primary amino group, a secondary amino group, a C₁-C₁₂ alkyl group, or a C₁-C₁₂ alkoxy group;
m may be an integer ranging from 1000 to 10000; and
n may be an integer ranging from 10 to 1000.

In some embodiments, a first example of the first aspect is presented according to the first aspect, where the 4-20-membered nitrogen-containing heterocyclic group may be a 4-membered nitrogen-containing heterocyclic group, a 5-membered nitrogen-containing heterocyclic group, or a 6-membered nitrogen-containing heterocyclic group. The 5-20-membered nitrogen-containing heteroaryl group may be a 5-membered nitrogen-containing heteroaryl group, a 6-membered nitrogen-containing heteroaryl group, or a 5-14-membered nitrogen-containing fused heteroaryl group.

In some embodiments, a second example of the first aspect is presented according to the first aspect, where the 4-20-membered nitrogen-containing heterocyclic group is an azetidinyl group, a tetrahydropyrrolyl group, a pyrrolidonyl group, or a hexahydropyridinyl group. The 5-20-membered nitrogen-containing heteroaryl group is a pyrrolyl group, a pyrazolyl group, an imidazolyl group, a 1,2,3-triazolyl group, a 1,2,4-triazolyl group, a tetrazolyl group, a pyridyl group, a pyridazinyl group, a pyrimidinyl group, a pyrazinyl group, a 1,3,5-triazinyl group, a quinolinyl group, a benzimidazolyl group, or a benzotriazolyl group. These nitrogen-containing groups possess lone pair electrons, so they can bond with HF, thereby immobilizing HF and preventing HF from damaging a passivation layer on surface of an aluminum foil substrate. This can greatly mitigate corrosion of the aluminum foil. In addition, this can prevent HF from corroding the positive electrode material and thus reduces loss of the positive electrode material, providing a beneficial effect on the capacity retention rate of the cell.

Preferably, the 4-20-membered nitrogen-containing heterocyclic group may be a tetrahydropyrrolyl group, a pyrrolidonyl group, or a hexahydropyridinyl group. More preferably, the 4-20-membered nitrogen-containing heterocyclic group may be a tetrahydropyrrolyl group or a pyrrolidonyl group.

Preferably, the 5-20-membered nitrogen-containing heteroaryl group may be a pyridyl group or an imidazolyl group. More preferably, the 5-20-membered nitrogen-containing heteroaryl group may be a pyridyl group.

In some specific embodiments, the 4-20-membered nitrogen-containing heterocyclic group may be one of the following structures: 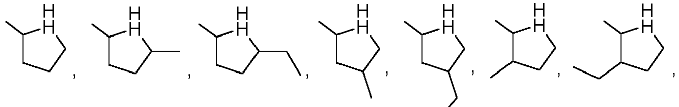 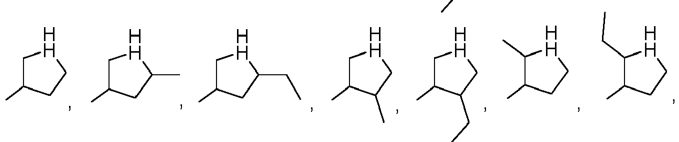 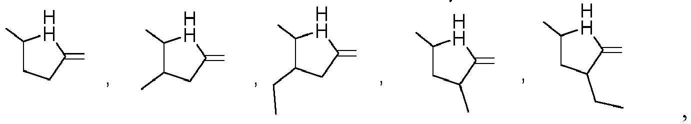 where * indicates a site bonded to another group.

In some specific embodiments, the 5-20-membered nitrogen-containing heteroaryl group may be one of the following structures: 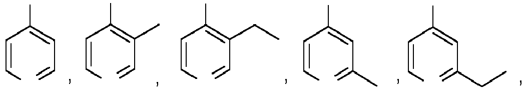 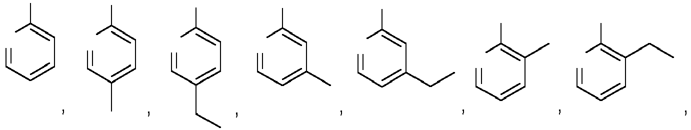 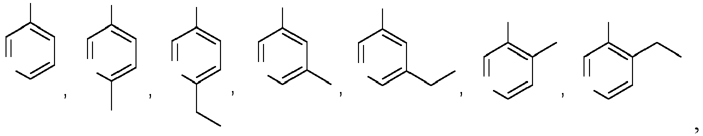 where * indicates a site bonded to another group.

Preferably, in a 4-20-membered nitrogen-containing heterocyclic group substituted with a substituent group or a 5-20-membered nitrogen-containing heteroaryl group substituted with a substituent group, the substituent group may be halogen, a hydroxyl group, a primary amino group, a secondary amino group, a C₁-C₆ alkyl group, or a C₁-C₆ alkoxy group. More preferably, the substituent group may be a C₁-C₆ alkyl group.

In some embodiments, R¹ and R² may each independently be hydrogen or a C₁-C₆ alkyl group.

In some embodiments, R³ and R⁴ may each independently be hydrogen, halogen, or a C₁-C₆ alkyl group.

In some embodiments, a third example of the first aspect is presented according to the first aspect, where R³ and R⁴ may each independently be halogen. In this design, halogen atoms are introduced which can improve adhesion performance of the additive, so the additive can better adhere to surface of the positive electrode current collector, thus maximizing the corrosion mitigation effect of the additive.

Preferably, R³ and R⁴ may each independently be F. Compared with other atoms (such as H) and groups, the F atom has stronger oxidation resistance, making the primer coating not prone to aging after long-term cycling, thereby improving long-term reliability of the primer coating, enabling the primer coating to perform well in mitigating the corrosion. In addition, when R³ and R⁴ are both F atoms, the additive is easy to synthesize and costs low.

In some embodiments, R⁵ may be hydrogen or a C₁-C₆ alkyl group.

In some embodiments, m may be an integer ranging from 5000 to 10000, for example, may be 5000, 5100, 5200, 5300, 5400, 5500, 5600, 5700, 5800, 5900, 6000, 6100, 6200, 6300, 6400, 6500, 6600, 6700, 6800, 6900, 7000, 7100, 7200, 7300, 7400, 7500, 7600, 7700, 7800, 7900, 8000, 8100, 8200, 8300, 8400, 8500, 8600, 8700, 8800, 8900, 9000, 9100, 9200, 9300, 9400, 9500, 9600, 9700, 9800, 9900, or 10,000.

In some embodiments, n may be an integer number from 50 to 500, for example, may be 50, 51, 52, 53, 54, 55, 56, 57, 58, 59, 60, 70, 80, 90, 100, 150, 200, 250, 300, 350, 400, 450, or 500.

In some embodiments, a fourth example of the first aspect is presented according to the first aspect, where m:n = (10-1000): 1. Preferably, m:n = (50-500): 1. More preferably, m:n = (50-200): 1. In this design, m indicates the number of polymerized units that have an adhesion effect (or units containing F atoms), and n indicates the number of polymerized units that can adsorb HF (or units containing nitrogen-containing heterocyclic groups). In the case of a relatively large ratio of m to n, when the additive is added to the primer coating, the primer coating has good adhesion to the electrode plate, but weak ability to adsorb HF, which has a poor effect on alleviating the corrosion of the positive electrode current collector, reducing the loss of the positive electrode active material due to HF, and improving cycling performance of the battery cell; and in the case of a too small m/n, when the additive is added to the primer coating, the primer coating has a poor adhesion to the electrode plate and thus easily falls off, resulting in failure of corrosion mitigation. With the ratio of the polymerization numbers of the two units in the molecular structure of the additive controlled, the corrosion mitigation effect of the additive can be maximized.

In some embodiments, a fifth example of the first aspect is presented according to the first aspect, where m may be an integer ranging from 5000 to 10000; n may be an integer ranging from 50 to 500; and m:n = (50-500): 1. In this design, the corrosion mitigation effect of the additive can be further improved by adjusting m, n, and their ratio.

In some specific embodiments, m may be an integer ranging from 5000 to 10000; n may be an integer ranging from 50 to 110; and m:n = (50-200): 1.

In some embodiments, a sixth example of the first aspect is presented according to the first aspect, where R¹ and R² may each independently be hydrogen or a C₁-C₆ alkyl group;
R³ and R⁴ may each independently be hydrogen, halogen, or a C₁-C₆ alkyl group;
R⁵ may be hydrogen or a C₁-C₆ alkyl group;
R⁶ may be a tetrahydropyrrolyl group unsubstituted or substituted with a substituent group, a pyrrolidonyl group unsubstituted or substituted with a substituent group, a pyridinyl group unsubstituted or substituted with a substituent group, a hexahydropyridinyl group unsubstituted or substituted with a substituent group, or an imidazolyl group unsubstituted or substituted with a substituent group, where the substituent group is halogen, a hydroxyl group, a primary amino group, a secondary amino group, a C₁-C₆ alkyl group, or a C₁-C₆ alkoxy group;
m may be an integer ranging from 1000 to 10000;
n may be an integer ranging from 10 to 1000; and
m:n = (10-1000):1.

In this design, the corrosion mitigation effect of the additive can be further improved by optimizing the groups R¹, R², R³, R⁴, R⁵, and R⁶, m, and n.

In some embodiments, a seventh example of the first aspect is presented according to the first aspect, where R¹ and R² may each independently be hydrogen;
R³ and R⁴ may each independently be F;
R⁵ may be hydrogen or a C₁-C₆ alkyl group;
R⁶ may be a tetrahydropyrrolyl group unsubstituted or substituted with a substituent group, a pyrrolidonyl group unsubstituted or substituted with a substituent group, or a pyridinyl group unsubstituted or substituted with a substituent group, where the substituent group may be a C₁-C₆ alkyl group;
m may be an integer ranging from 1000 to 10000;
n may be an integer ranging from 10 to 1000; and
m:n = (10-1000):1.

In this design, the corrosion mitigation effect of the additive can be further improved by optimizing the groups R¹, R², R³, R⁴, R⁵, and R⁶, the substituent group, m, and n.

A second aspect of this application provides a preparation method of additive of general formula I, including the following steps:
reacting a compound of formula II with a compound of formula III in the presence of an initiator to polymerize, to obtain the additive of general formula I: 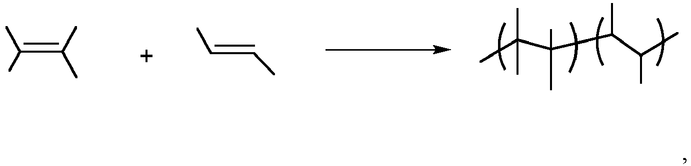 where
R¹ and R² are each independently hydrogen or a C₁-C₁₂ alkyl group;
R³ and R⁴ are each independently hydrogen, halogen, or a C₁-C₁₂ alkyl group;
R⁵ is hydrogen or a C₁-C₁₂ alkyl group;
R⁶ is a 4-20-membered nitrogen-containing heterocyclic group unsubstituted or substituted with a substituent group or a 5-20-membered nitrogen-containing heteroaryl group unsubstituted or substituted with a substituent group, where the substituent group is halogen, a hydroxyl group, a primary amino group, a secondary amino group, a C₁-C₁₂ alkyl group, or a C₁-C₁₂ alkoxy group;
m is an integer ranging from 1000 to 10000; and
n is an integer ranging from 10 to 1000.

The R¹, R², R³, R⁴, R⁵, R⁶, substituent group, m, and n are all defined as above.

In the technical solution of this embodiment of this application, the compound of formula II undergoes a polymerization reaction with the compound of formula III, so the additive in this application can be easily prepared.

In some embodiments, a first example of the second aspect is presented according to the second aspect, where a molar ratio of the compound of formula II to the compound of formula III is (10-1000):1, for example, it may be 10:1, 50:1, 100:1, 150:1, 200:1, 250:1, 300:1, 350:1, 400:1, 450:1, 500:1, 550:1, 600:1, 650:1, 700:1, 750:1, 800:1, 850:1, 900:1, 950:1, or 1000:1, preferably (10-100): 1.

In this design, the ratio of m to n can be controlled by adjusting the molar ratio of the compound of formula II to the compound of formula III, thereby maximizing adhesion performance and HF adsorption of the additive.

In some embodiments, a second example of the second aspect is presented according to the second aspect, where when the polymerization reaction is complete, a resulting crude product is precipitated in ice-cold ethyl ether. In this design, the crude product is precipitated in ice-cold ethyl ether, thereby implementing purification of the product, improving the product purity.

Preferably, the ice-cold ethyl ether may have a temperature of -10°C to 0°C.

In some specific embodiments, the polymerization reaction may be carried out under inert gas protection. The inert gas may be nitrogen, argon, or the like. The polymerization reaction carried out under inert gas protection can prevent oxidation of free radicals.

In some specific embodiments, the initiator may be one or more of azobisisobutyronitrile, azobisisoheptanonitrile, diisopropyl peroxydicarbonate, di-n-propyl peroxydicarbonate, di-tert-butane peroxide, potassium persulfate, ammonium persulfate, succinyl peroxide, and di(2-ethylhexyl) peroxydicarbonate. Preferably, the initiator may be azobisisobutyronitrile or azobisisoheptanonitrile.

In some specific embodiments, reaction temperature of the polymerization reaction may be 40-80°C, for example, 40°C, 45°C, 50°C, 55°C, 60°C, 65°C, 70°C, 75°C, or 80°C. The reaction time may be 2-24 h, for example, 2 h, 3 h, 4 h, 5 h, 6 h, 7 h, 8 h, 9 h, 10 h, 11 h, 12h, 13 h, 14 h, 15 h, 16 h, 17 h, 18 h, 19 h, 20 h, 21 h, 22 h, 23 h, or 24 h.

In some specific embodiments, a solvent used for the polymerization reaction may be one or more of tetrahydrofuran, pyridine, N,N-dimethylformamide, and N-methylpyrrolidone. This application does not particularly limit the type of the solvent, as long as it can dissolve the compound of formula II and the compound of formula III and does not participate in the polymerization reaction.

A third aspect of this application provides a usage of the additive in the first aspect of this application to mitigate corrosion of a positive electrode current collector.

A fourth aspect of this application provides a positive electrode plate including the additive in the first aspect of this application.

In the technical solution of this embodiment of this application, the additive of the first aspect of this application is used, so the corrosion of the positive electrode current collector in the positive electrode plate of this application can be greatly alleviated, effectively prolonging service life of the battery.

A fifth aspect of this application provides a preparation method of positive electrode plate, including:
mixing the additive in the first aspect, a conductive agent, and a solvent, applying the mixture on a positive electrode current collector, and performing drying, to obtain a primer coating; and
forming a positive electrode material layer on the primer coating.

In the technical solution of this embodiment of this application, the primer coating including the additive of this application is formed on the positive electrode current collector, and the positive electrode material layer is formed on the primer coating. This can effectively adsorb and immobilize HF in the battery, reduce the corrosion of the positive electrode current collector and the loss of the positive electrode active material, and prolong service life of the battery.

In some embodiments, a first example of the fifth aspect is presented according to the fifth aspect, where the conductive agent may be known to persons skilled in the art, for example, it may be carbon nanotubes, conductive carbon black, or the like.

In some embodiments, a second example of the fifth aspect is presented according to the fifth aspect, where a mass ratio of the additive to the conductive agent may be 1:9 to 9:1, for example, 1:9, 1:8, 1:7, 1:6, 1:5, 1:4, 1:3, 1:2, 1:1.5, 1:1, 1.5:1, 2:1, 3:1, 4:1, 5:1, 6:1, 7:1, 8:1, or 9:1, preferably 1:1.5 to 1.5:1.

In some embodiments, a third example of the fifth aspect is presented according to the fifth aspect, where the solvent may be known to persons skilled in the art, for example, it may be N-methylpyrrolidone, N,N-dimethylformamide, pyridine, and the like.

In some embodiments, a fourth example of the fifth aspect is presented according to the fifth aspect, where the positive electrode current collector may be made of a material having good electrical conductivity and mechanical strength, such as aluminum foil, but is not limited thereto.

In some embodiments, a fifth example of the fifth aspect is presented according to the fifth aspect, where the primer coating may be formed on both surfaces of the positive electrode current collector.

In some embodiments, a sixth example of the fifth aspect is presented according to the fifth aspect, where the additive, binder, conductive agent and solvent may be mixed in the step of preparing the primer coating. In particular, when neither of R³ and R⁴ is halogen, the primer coating preferably further includes a binder. The binder may be known to persons skilled in the art and is not described in detail herein.

In this application, a forming method of the positive electrode material layer may be known to persons skilled in the art and is not described in detail herein.

In the prior art, to alleviate the corrosion of the positive electrode current collector, one or more silicone compounds or choline ionic liquids are typically added to the electrolyte to inhibit the corrosion of the positive electrode current collector by HF. However, such method of mitigating the corrosion on the positive electrode current collector by adding an additive to the electrolyte tends to affect battery performance (such as cycling performance, C-rate performance, and low-temperature performance). In contrast, after the additive in this application is mixed with a conductive agent, the mixture is applied on the surface of the positive electrode current collector as a primer coating to mitigate corrosion, and thus does not adversely affect the battery performance.

A sixth aspect of this application provides a lithium-ion battery including the positive electrode plate in the fourth aspect of this application or a positive electrode plate obtained according to the preparation method in the fifth aspect of this application.

In the technical solution of this embodiment of this application, the additive of the first aspect of this application is used, so the corrosion of the positive electrode current collector in the lithium-ion battery of this application can be greatly alleviated, effectively prolonging service life of the battery.

### Definition and explanation of terminology

The term "C₁-C₁₂ alkyl group" should be understood as preferably representing a straight or branched saturated monovalent hydrocarbon group with 1 to 12 carbon atoms, and is preferably a C₁-C₆ alkyl group. "C₁-C₆ alkyl group" shall be understood as preferably representing a straight or branched saturated monovalent hydrocarbon group having 1, 2, 3, 4, 5, or 6 carbon atoms, such as a methyl group, an ethyl group, a propyl group, a butyl group, a pentyl group, a hexyl group, an isopropyl group, an isobutyl group, a sec-butyl group, a tert-butyl group, an isopentyl group, a 2-methylbutyl group, a 1-methylbutyl group, a 1-ethylpropyl group, a 1,2-dimethylpropyl group, a neopentyl group, a 1,1-dimethylpentyl group, a 4-methylpentyl group, a 3-methylpentyl group, a 2-methylpentyl group, a 1-methylpentyl group, a 2-ethylbutyl group, a 1-ethylbutyl group, a 3,3-dimethylbutyl group, a 2,2-dimethylbutyl group, a 1,1-dimethylbutyl group, a 2,3-dimethylbutyl group, a 1,3-dimethylbutyl group, or a 1,2-dimethylbutyl group, or their isomers. Particularly, the group has 1, 2, 3, or 4 carbon atoms ("C₁-C₄ alkyl group"), such as a methyl group, an ethyl group, a propyl group, a butyl group, an isopropyl group, an isobutyl group, a sec-butyl group, or a tert-butyl group; and more particularly, the group has 1, 2, or 3 carbon atoms ("C₁-C₃ alkyl group"), such as a methyl group, an ethyl group, an n-propyl group, or an isopropyl group.

An alkoxy group refers to an alkyl group bonded to one oxygen atom. The term "C₁-C₁₂ alkoxy group" shall be understood as preferably representing a straight or branched alkoxy group having 1 to 12 carbon atoms and more preferably having 1 to 6 carbon atoms, and is preferably a C₁-C₆ alkoxy group.

The term "halogen" refers to F, Cl, Br, or I.

The term "4-20-membered nitrogen-containing heterocyclic group" refers to a saturated monovalent monocyclic or bicyclic hydrocarbon ring having 4-20 ring atoms and 1-5 N atoms, preferably 1-3 N atoms.

The term "5-20-membered nitrogen-containing heteroaryl group" should be understood as including a monovalent monocyclic, bicyclic, or tricyclic aromatic ring system having 5-20 ring atoms and containing 1-5 N atoms, preferably 1-3 N atoms, for example, a 5-membered nitrogen-containing heteroaryl group, a 6-membered nitrogen-containing heteroaryl group, or a 5-14--membered nitrogen-containing fused heteroaryl group.

The term "substituted" refers to one or more hydrogen atoms in the specified atom being substituted by the listed groups, provided that a normal atomic valence of the specified atom in this case is not exceeded and that a stable compound is formed after the substitution. Combinations of substituent groups and/or variables are allowed only when such combinations form stable compounds.

The present invention is further described with reference to specific examples. It should be understood that these examples are merely intended to illustrate the present invention but not to limit the scope of the present invention.

### Preparation of additive

### Example 1: Preparation of formula I-1

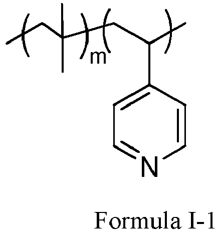

1 mol vinylidene fluoride (CAS No. 75-38-7) and 0.02 mol 4-vinylpyridine (CAS No. 100-43-6) were weighed and dissolved in 200 mL tetrahydrofuran. After a vacuum was created (to avoid oxidation of free radicals) in a three-necked flask, N₂ was continuously introduced. Then, 0.05 g of initiator azobisisobutyronitrile was added and the mixture was heated to 70°C. After a stir and reaction of 12 h, the resulting crude product was poured into ice-cold ethyl ether at 0°C to precipitate, thus obtaining the additive of formula 1-1, where m was 5005, n was 98, and m:n = 51.

Proton NMR spectroscopy was used, and m and n were determined by calculating the peak areas of the characteristic hydrogen in different polymerized units in the additive molecule. Specific characterization-related information is as follows:
The molecular structure of the additive was determined via a Bruker AVANCE III 400 NMR instrument at 25°C, with tetramethylsilane (TMS) as an internal standard and the solvent used was deuterated chloroform (CDCl₃).

Test procedure: 5 mg of the additive sample was dissolved in the foregoing solvent and transferred to an NMR tube, and after 1 mL the sample was introduced, the test could be conducted. After the test, m and n could be determined by calculating the peak areas of the characteristic hydrogen in different polymerized units in the additive molecule.

### Example 2: Preparation of formula I-1

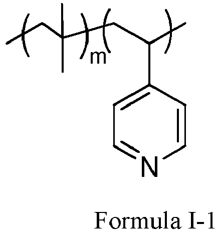

2 mol vinylidene fluoride (CAS No. 75-38-7) and 0.01 mol 4-vinylpyridine (CAS No. 100-43-6) were weighed and dissolved in 200 mL tetrahydrofuran. After a vacuum was created (to avoid oxidation of free radicals) in a three-necked flask, N₂ was continuously introduced. Then, 0.05 g of initiator azobisisobutyronitrile was added and the mixture was heated to 70°C. After a stir and reaction of 12 h, the resulting crude product was poured into ice-cold ethyl ether at 0°C to precipitate, and the additive of formula 1-1 was obtained, where m was 9879, n was 51, and m:n = 194.

m and n were determined in the same way as those in Example 1.

### Example 3: Preparation of formula 1-1

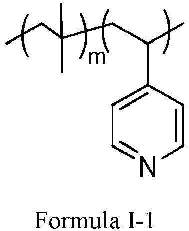

1 mol vinylidene fluoride (CAS No. 75-38-7) and 0.1 mol 4-vinylpyridine (CAS No. 100-43-6) were weighed and dissolved in 200 mL tetrahydrofuran. After a vacuum was created (to avoid oxidation of free radicals) in a three-necked flask, N₂ was continuously introduced. Then, 0.05 g of initiator azobisisobutyronitrile was added and the mixture was heated to 70°C. After a stir and reaction of 12 h, the resulting crude product was poured into ice-cold ethyl ether at 0°C to precipitate, and the additive of formula I-1 was obtained, where m was 5012, n was 504, and m:n = 10.

m and n were determined in the same way as those in Example 1.

### Example 4: Preparation of formula 1-1

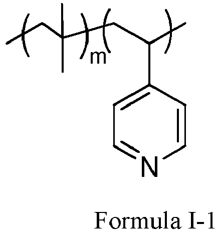

2 mol vinylidene fluoride (CAS No. 75-38-7) and 0.002 mol 4-vinylpyridine (CAS No. 100-43-6) were weighed and dissolved in 200 mL tetrahydrofuran. After a vacuum was created (to avoid oxidation of free radicals) in a three-necked flask, N₂ was continuously introduced. Then, 0.05 g of initiator azobisisobutyronitrile was added and the mixture was heated to 70°C. After a stir and reaction of 12 h, the resulting crude product was poured into ice-cold ethyl ether at 0°C to precipitate, and the additive of formula I-1 was obtained, where m was 9976, n was 10, and m:n = 998.

m and n were determined in the same way as those in Example 1.

### Example 5: Preparation of formula 1-2

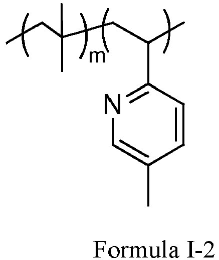

1 mol vinylidene fluoride and 0.02 mol 2-vinyl-5-methylpyridine (CAS No. 107411-10-9) were weighed and dissolved in 200 mL tetrahydrofuran. After a vacuum was created (to avoid oxidation of free radicals) in a three-necked flask, N₂ was continuously introduced. Then, 0.05 g of initiator azobisisobutyronitrile was added and the mixture was heated to 70°C. After a stir and reaction of 12 h, the resulting crude product was poured into ice-cold ethyl ether at 0°C to precipitate, thus obtaining the additive of formula 1-2, where m was 5123, n was 102, and m:n = 50.

m and n were determined in the same way as those in Example 1.

### Example 6: Preparation of formula 1-3

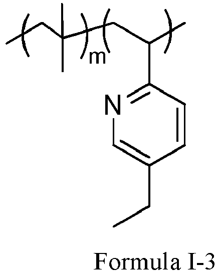

1 mol vinylidene fluoride and 0.02 mol 5-ethyl-2-vinylpyridine (CAS No. 5408-74-2) were weighed and dissolved in 200 mL tetrahydrofuran. After a vacuum was created (to avoid oxidation of free radicals) in a three-necked flask, N₂ was continuously introduced. Then, 0.05 g of initiator azobisisobutyronitrile was added and the mixture was heated to 70°C. After a stir and reaction of 12 h, the resulting crude product was poured into ice-cold ethyl ether at 0°C to precipitate, thus obtaining the additive of formula 1-3, where m was 5203, n was 104, and m:n = 50.

m and n were determined in the same way as those in Example 1.

### Example 7: Preparation of formula 1-4

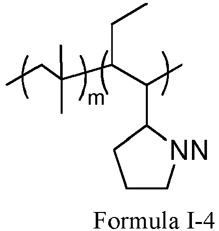

1 mol vinylidene fluoride and 0.02 mol 2-(but-1-en-1-yl)tetrahydropyrrole (CAS No. 617713-95-8) were weighed and dissolved in 200 mL tetrahydrofuran. After a vacuum was created (to avoid oxidation of free radicals) in a three-necked flask, N₂ was continuously introduced. Then, 0.05 g of initiator azobisisobutyronitrile was added and the mixture was heated to 70°C. After a stir and reaction of 12 h, the resulting crude product was poured into ice-cold ethyl ether at 0°C to precipitate, thus obtaining the additive of formula I-4, where m was 5119, n was 101, and m:n = 51.

m and n were determined in the same way as those in Example 1.

### Example 8: Preparation of formula 1-5

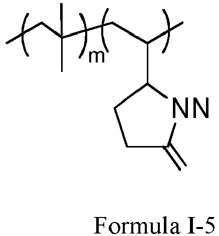

1 mol vinylidene fluoride and 0.02 mol 5-vinyl-2-pyrrolidone (CAS No. 7529-16-0) were weighed and dissolved in 200 mL tetrahydrofuran. After a vacuum was created (to avoid oxidation of free radicals) in a three-necked flask, N₂ was continuously introduced. Then, 0.05 g of initiator azobisisobutyronitrile was added and the mixture was heated to 70°C. After a stir and reaction of 12 h, the resulting crude product was poured into ice-cold ethyl ether at 0°C to precipitate, thus obtaining the additive of formula I-5, where m was 5007, n was 99, and m:n = 51.

m and n were determined in the same way as those in Example 1.

### Comparative example 1

Commercially available polyvinylidene fluoride (PVDF) was provided as an additive used for a purpose of contrast with the additives of Examples 1 to 8.

### Comparative example 2

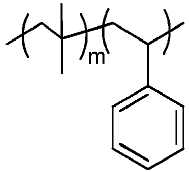

The method was carried out as described in Example 1, with a difference that 4-vinylpyridine was replaced with 4-vinylphenyl. In the prepared additive of formula I-1, m is 5002, n is 101, and m:n = 50.

m and n were determined in the same way as those in Example 1.

### Comparative example 3

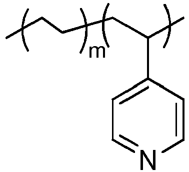

The method was carried out as described in Example 1, with a difference that polyvinylidene fluoride was replaced with vinyl. In the prepared additive of formula I-1, m is 4997, n is 102, and m:n = 49.

m and n were determined in the same way as those in Example 1.

### Comparative example 4

The method was carried out as described in Example 1, with differences that the amount of vinylidene fluoride was 1 mol and the amount of 4-vinylpyridine was 0.2 mol. In the prepared additive of formula I-1, m is 5000, n is 997, and m:n = 5.

m and n were determined in the same way as those in Example 1.

### Comparative example 5

The method was carried out as described in Example 1, with differences that the amount of vinylidene fluoride was 2 mol and the amount of 4-vinylpyridine was 0.015 mol. In the prepared additive of formula I-1, m is 10102, n is 8, and m:n = 1263.

m and n were determined in the same way as those in Example 1.

The additives of Examples 1 to 8 and Comparative examples 1 to 5 were used to prepare lithium-ion batteries according to the following general preparation method.

### Preparation of lithium-ion battery

1. Primer coating pre-treatment of positive electrode plate

The additives of Examples 1 to 8 and Comparative examples 1 to 5 were separately dissolved with conductive carbon black SP at a mass ratio of 50:50 in N-methyl-pyrrolidone (NMP). After stirring until a uniform dispersion was achieved, the mixture was applied on an aluminum foil substrate. The coated substrate was then dried and set aside for future use.

### 2. Preparation of lithium-ion battery

(1) Preparation of positive electrode plate: A ternary positive electrode material of nickel, cobalt, and manganese, along with conductive carbon black SP and PVDF, were combined in a mass ratio of 96:2.5:1.5. After uniform mixing was achieved, solvent NMP was added, adjusting the solid content to between 70% and 80%. This mixture was stirred until uniform, resulting in a positive electrode slurry. The positive electrode slurry was then applied onto a pretreated positive electrode plate (that is, the positive electrode plate obtained from Step 1), followed by drying, cold pressing, and cutting to produce the final positive electrode plate.
(2) Negative electrode plate preparation: Graphite and conductive carbon black SP were dry mixed in a mass ratio of 97:3. Deionized water was then added, adjusting the solid content to between 45% and 55%. This mixture was stirred until uniform, yielding a negative electrode slurry. Then, processes including coating application, drying, cold pressing, and cutting followed to produce the final negative electrode plate,
(3) The positive electrode plate produced in step 1 and the negative electrode plate produced in step 2 were wound together with a separator to form a jelly roll which was then encapsulated in an aluminum plastic film to form a dry cell. Following electrolyte injection, formation, and aging processes, a lithium-ion battery was successfully prepared.

### Electrode plate test

### 1. Electrode plate adhesion test

The positive electrode plates of the examples and comparative examples were cut into test samples of 100 mm in length and 10 mm in width. A stainless steel plate, 25 mm wide, was taken and affixed with double-sided tape (11 mm in width). One side of the test sample, with the positive electrode material, was stuck onto the double-sided tape on the stainless steel plate. A pressure roller of 2000 g was rolled back and forth three times at a speed of 300 mm/min over the surface of the test sample. Then, one end of the test sample was bent 180 degrees, the positive electrode material layer of the test sample was manually peeled from the current collector by 25 mm in a length direction. The test sample was then fixed on a testing machine (for example, INSTRON 336) with a peeling surface aligned with a force line of the testing machine (that is, parallel to a moving direction of the testing machine during peeling). The testing machine continuously performed peeling at a speed of 30 mm/min, yielding a peeling force curve. The mean value on a plateau (that is, a section on the peeling force curve that no longer monotonically increases) was taken as the peeling force F0, and the adhesion F between the negative electrode film and the current collector in the test sample was calculated according to F = F0/width of the test sample (the unit of measurement for F being N/m). The test results are shown in Table 1 below.

### 2. Inspection of electrode plate corrosion after cycling

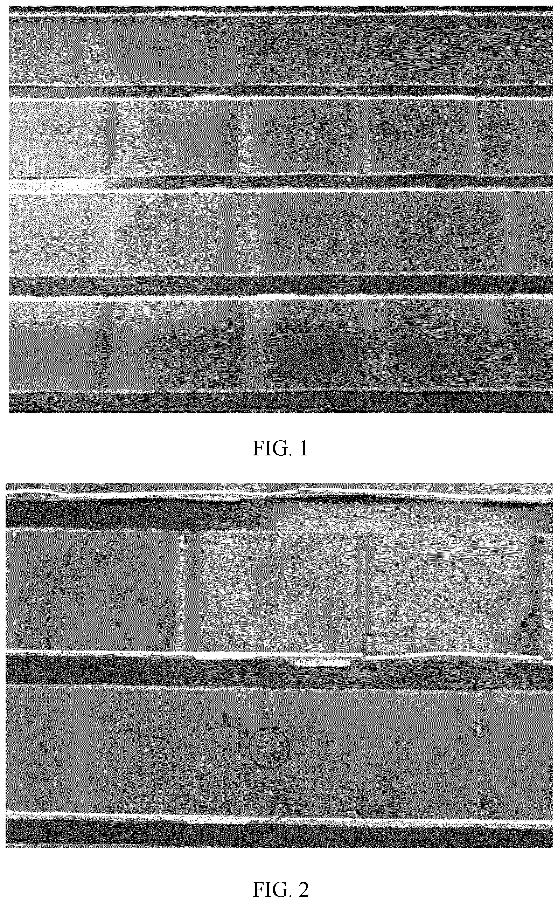

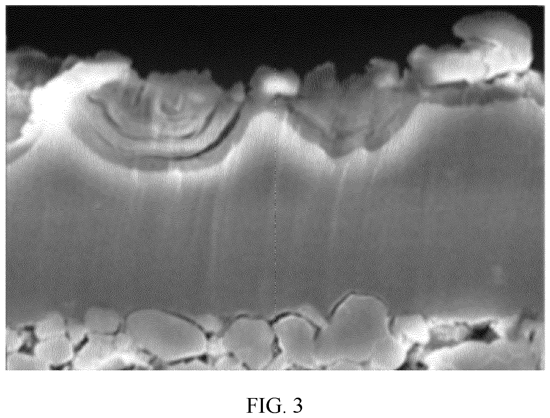

The cell was disassembled after 500 cycles at 60°C, the surface of the positive electrode was inspected for corrosion. Based on the size of the corroded area, the severity of corrosion was categorized into four different levels: severe, moderate, minor, or none. The test results are shown in Table 1 below. The surface corrosion of the positive electrode plate of Example 1 is shown in FIG. 1. The surface corrosion of the positive electrode plate of Comparative example 1 is shown in FIG. 2 and FIG. 3.

### Battery performance test

### Cycling performance test of battery

At 25°C, the battery was charged to a voltage of 4.3 V at 1/3C constant current, then charged at 4.3 V constant voltage to a current of 0.05C, left standing for 5 minutes, and then discharged at 1/3C to a voltage of 2.8 V A resulting capacity was recorded as an initial capacity C0. The battery was transferred to a high temperature box at 60°C, the foregoing charging and discharging steps were repeated for the same battery, and a discharge capacity Cn of the battery after the n-th cycle was recorded. The capacity retention rate of the battery after each cycle was Pn = Cn/C0 × 100%, and discharge capacity retention rates after the 500th cycle of the examples and comparative examples were measured separately. The test results are shown in Table 1 below.

**Table 1**

| No. | Additive related parameters | | | Adhesion (N/m) | Corrosion of aluminum foil | Capacity retention rate |
|---|---|---|---|---|---|---|
| | m | n | m/n | | | |
| Example 1 | 5005 | 98 | 51 | 22 | None | 87.2% |
| Example 2 | 9879 | 51 | 194 | 28 | None | 86.7% |
| Example 3 | 5012 | 504 | 10 | 15 | None | 84.5% |
| Example 4 | 9976 | 10 | 998 | 36 | Minor | 84.0% |
| Example 5 | 5123 | 102 | 50 | 22 | None | 86.5% |
| Example 6 | 5203 | 104 | 50 | 23 | None | 85.5% |
| Example 7 | 5119 | 101 | 51 | 22 | None | 86.4% |
| Example 8 | 5007 | 99 | 51 | 24 | None | 85.9% |
| Comparative example 1 | / | / | / | 21 | Severe | 79.3% |
| Comparative example 2 | 5002 | 101 | 50 | 20 | Severe | 79.5% |
| Comparative example 3 | 4997 | 102 | 49 | 22 | Severe | 79.60% |
| Comparative example 4 | 5000 | 997 | 5 | 11 | Severe | 80.0% |
| Comparative example 5 | 10102 | 8 | 1263 | 38 | Severe | 79.6% |

A comparison of Examples 1 to 8 with Comparative example 1 shows that, after use of the additive of this application, corrosion of aluminum foil is significantly alleviated, and the cycling capacity retention rate of the battery is also significantly improved. As visually shown in FIG. 1 to FIG. 3, no aluminum foil corrosion was found on the positive electrode plate of Example 1, and the interface is good (as shown in FIG. 1), while the positive electrode plate of Comparative example 1 is corroded severely with a large amount of active material falling off the surface (as shown in FIG. 2 to FIG. 3).

A comparison of Example 1 with Comparative example 2 shows that the nitrogen atom in the group R⁶ is crucial to mitigate the corrosion of the aluminum foil.

A comparison of Example 1 with Comparative example 3 shows that, when the groups R³ and R⁴ are both H, the primer coating is prone to aging and thus falling off after long-term cycling due to the lack of F for better oxidation resistance, and thus does not perform well in mitigating the corrosion.

A comparison of Examples 1, 3, and 4 with Comparative examples 4 and 5 shows that, when the ratio of m to n is not within the range specified in this application, the anti-corrosion effect is always poor.

A comparison of Examples 1 to 4 shows that, when the ratio of m to n is relatively small (Example 3), the adhesion of the electrode plate is low, and although the anti-corrosion effect is still good, the low adhesion tends to cause the active material to fall off, so the capacity retention rate is slightly lower; and when the ratio of m to n is relatively large (Example 4), the adhesion of the electrode plate is high, but structural units that adsorb HF account for a small percentage, so the anti-corrosion effect is poor, slight corrosion still occurs, and the capacity retention rate is also relatively low.

A comparison of Examples 5 to 8 shows that, through expansion of the structural composition, the synthesized additives also have corresponding anti-corrosion effects. This indicates that these additives belong to a class of similar structures with universal functionalities, not restricted to a single structure.

The foregoing descriptions are merely exemplary specific implementations of the present invention, and the protection scope of the present invention is not limited thereto. Any variations or replacements readily figured out by persons skilled in the art within the technical scope disclosed in the present invention shall fall within the protection scope of the present invention. Therefore, the protection scope of the present invention shall be subject to the protection scope of the claims.

## Claims

1. An additive **characterized by** having a structure of general formula I: 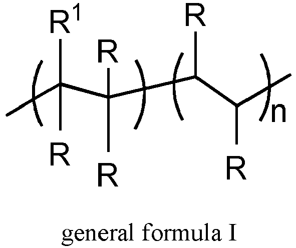 wherein
R¹ and R² are each independently hydrogen or a C₁-C₁₂ alkyl group;
R³ and R⁴ are each independently hydrogen, halogen, or a C₁-C₁₂ alkyl group;
R⁵ is hydrogen or a C₁-C₁₂ alkyl group;
R⁶ is a 4-20-membered nitrogen-containing heterocyclic group unsubstituted or substituted with a substituent group or a 5-20-membered nitrogen-containing heteroaryl group unsubstituted or substituted with a substituent group, wherein the substituent group is halogen, a hydroxyl group, a primary amino group, a secondary amino group, a C₁-C₁₂ alkyl group, or a C₁-C₁₂ alkoxy group;
m is an integer ranging from 1000 to 10000; and
n is an integer ranging from 10 to 1000.

2. The additive according to claim 1, **characterized in that** the 4-20-membered nitrogen-containing heterocyclic group is a 4-membered nitrogen-containing heterocyclic group, a 5-membered nitrogen-containing heterocyclic group, or a 6-membered nitrogen-containing heterocyclic group; and
the 5-20-membered nitrogen-containing heteroaryl group is a 5-membered nitrogen-containing heteroaryl group, a 6-membered nitrogen-containing heteroaryl group, or a 5-14-membered nitrogen-containing fused heteroaryl group.

3. The additive according to claim 2, **characterized in that** the 4-20-membered nitrogen-containing heterocyclic group is an azetidinyl group, a tetrahydropyrrolyl group, a pyrrolidonyl group, or a hexahydropyridinyl group; and
the 5-20-membered nitrogen-containing heteroaryl group is a pyrrolyl group, a pyrazolyl group, an imidazolyl group, a 1,2,3-triazolyl group, a 1,2,4-triazolyl group, a tetrazolyl group, a pyridyl group, a pyridazinyl group, a pyrimidinyl group, a pyrazinyl group, a 1,3,5-triazinyl group, a quinolinyl group, a benzimidazolyl group, or a benzotriazolyl group.

4. The additive according to any one of claims 1 to 3, **characterized in that** R³ and R⁴ are each independently halogen.

5. The additive according to claim 4, **characterized in that** m:n = (10-1000): 1.

6. The additive according to claim 5, **characterized in that**: m is an integer ranging from 5000 to 10000; n is an integer ranging from 50 to 500; and m:n = (50-500): 1.

7. The additive according to any one of claims 1 to 3, **characterized in that**
R¹ and R² are each independently hydrogen or a C₁-C₆ alkyl group;
R³ and R⁴ are each independently hydrogen, halogen, or a C₁-C₆ alkyl group;
R⁵ is hydrogen or a C₁-C₆ alkyl group;
R⁶ is a tetrahydropyrrolyl group unsubstituted or substituted with a substituent group, a pyrrolidonyl group unsubstituted or substituted with a substituent group, a pyridinyl group unsubstituted or substituted with a substituent group, a hexahydropyridinyl group unsubstituted or substituted with a substituent group, or an imidazolyl group unsubstituted or substituted with a substituent group, wherein the substituent group is halogen, a hydroxyl group, a primary amino group, a secondary amino group, a C₁-C₆ alkyl group, or C₁-C₆ alkoxy group;
m is an integer ranging from 1000 to 10000;
n is an integer ranging from 10 to 1000; and
m:n = (10-1000):1.

8. The additive according to any one of claims 1 to 3, **characterized in that**
R¹ and R² are each independently hydrogen;
R³ and R⁴ are each independently F;
R⁵ is hydrogen or a C₁-C₆ alkyl group;
R⁶ is a tetrahydropyrrolyl group unsubstituted or substituted with a substituent group, a pyrrolidonyl group unsubstituted or substituted with a substituent group, or a pyridinyl group unsubstituted or substituted with a substituent group, wherein the substituent group is a C₁-C₆ alkyl group;
m is an integer ranging from 1000 to 10000;
n is an integer ranging from 10 to 1000; and
m:n = (10-1000):1.

9. A preparation method of additive of general formula I, **characterized by** comprising the following steps:
reacting a compound of formula II with a compound of formula III in the presence of an initiator to polymerize, to obtain the additive of general formula I: 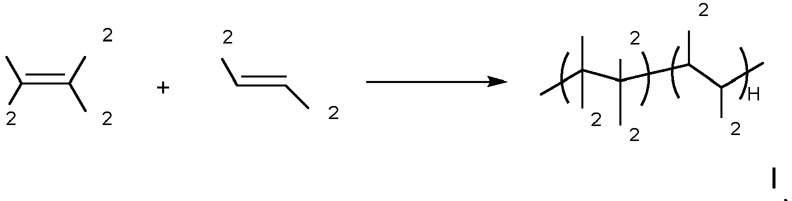 wherein
R¹ and R² are each independently hydrogen or a C₁-C₁₂ alkyl group;
R³ and R⁴ are each independently hydrogen, halogen, or a C₁-C₁₂ alkyl group;
R⁵ is hydrogen or a C₁-C₁₂ alkyl group;
R⁶ is a 4-20-membered nitrogen-containing heterocyclic group unsubstituted or substituted with a substituent group or a 5-20-membered nitrogen-containing heteroaryl group unsubstituted or substituted with a substituent group, wherein the substituent group is halogen, a hydroxyl group, a primary amino group, a secondary amino group, a C₁-C₁₂ alkyl group, or a C₁-C₁₂ alkoxy group;
m is an integer ranging from 1000 to 10000; and
n is an integer ranging from 10 to 1000.

10. The preparation method according to claim 9, **characterized in that** a molar ratio of the compound of formula II to the compound of formula III is (10-1000):1.

11. The preparation method according to claim 9 or 10, **characterized in that** when the polymerization reaction is complete, a resulting crude product is precipitated in ice-cold ethyl ether.

12. A usage of the additive according to any one of claims 1 to 8 to mitigate corrosion of a positive electrode current collector.

13. A positive electrode plate, **characterized by** comprising the additive according to any one of claims 1 to 8.

14. A preparation method of positive electrode plate, **characterized by** comprising:
mixing the additive according to any one of claims 1 to 8, a conductive agent, and a solvent, applying the mixture on a positive electrode current collector, and performing drying, to obtain a primer coating; and
forming a positive electrode material layer on the primer coating.

15. A lithium-ion battery **characterized by** comprising the positive electrode plate according to claim 13 or a positive electrode plate obtained according to the preparation method according to claim 14.
